# EUROPEAN PATENT APPLICATION

(11) **EP 4 694 219 A1**
(43) Date of publication of application: **11.02.2026**
(21) Application number: 24784255.2
(22) Date of filing: 02.04.2024
(51) Int. Cl.: H04W 4/06

(54) **INFORMATION TRANSMISSION METHOD AND APPARATUS, AND TERMINAL AND FIRST NETWORK FUNCTION ENTITY**

(30) Priority: 06.04.2023 CN 202310362699
(71) Applicant: Datang Mobile Communications Equipment Co., Ltd., Beijing 100085 (CN)
(72) Inventor: DUAN, Xiaoyan, Beijing 100085 (CN)
(74) Representative: Studio Torta S.p.A.
(86) International application number: PCT/CN2024/085443
(87) International publication number: WO 2024/208171

(57) **Abstract**

Provided are information transmission method and apparatus, terminal and first network function entity, which relates to communications field. The method applied to a terminal comprises: receiving first start time and/or first activation time of an MBS session from a first network function entity; when number of repeated execution of a target process reaches a first number and a paging message and/or service data related to the MBS session is not acquired, transitioning to a connected state from an idle state, wherein the target process comprises waking up at first start time and/or first activation time, monitoring or attempting to receive the paging message and/or the service data; receiving a first message from the first network function entity, wherein a second time message in the first message is for instructing a terminal to receive, at second start time and/or second activation time, the paging message and/or the service data.

## Description

### CROSS-REFERENCE TO RELATED APPLICATION

This disclosure claims priority to the Chinese Patent Application No. 202310362699.5, filed with the China National Intellectual Property Administration on April 6, 2023, entitled "Information Transmission Method, Apparatus, Terminal, and First Network Function Entity", the entire contents of which are incorporated herein by reference.

### TECHNICAL FIELD

The present disclosure relates to the field of communication technologies, and in particular, to an information transmission method, an information transmission apparatus, a terminal, and a first network function entity.

### BACKGROUND

Currently, a User Equipment (UE, i.e., a terminal) supports a power-saving mechanism: it transitions to a sleep state for a certain period of time, during which it does not monitor paging messages sent by the network and cannot receive data; after the sleep period expires, the UE wakes up to monitor paging messages sent by the network, and/or receive or send data, and then transitions to the next sleep period, thereby achieving the purpose of saving power.

To support the UE in waking up to receive multicast and broadcast services(or data) within the existing specified sleep period, a new mechanism is introduced: an Application Function (AF) sends the start time and activation time (i.e., data transmission time) of a multicast and/or broadcast session to the UE through a Service Announcement procedure (or message), so that the UE wakes up at the start time and activation time of the multicast and/or broadcast session to receive Multicast/Broadcast Service (MBS) data or MBS-related paging messages.

However, when the start time and/or activation time of the multicast and/or broadcast session needs to be updated, if the UE is unreachable (e.g., when the UE is in an idle state and asleep), the AF cannot notify the UE of the new start time and/or activation time through the Service Announcement procedure (or message). This leads to a lack of synchronization between the UE side and the application server/network side regarding start time and/or activation time information of the multicast/broadcast session, failing to achieve the goals of power saving and correct reception of multicast/broadcast service data.

### SUMMARY

The objective of the present disclosure is to provide an information transmission method, an information transmission apparatus, a terminal, and a first network function entity, so as to solve the problem in the related art that the updated start time and activation time of an MBS session cannot be notified to the terminal when the terminal is unreachable.

In a first aspect, in order to address the above technical problem, an information transmission method applied to a terminal is provided. The method includes: receiving first time information of a Multicast/Broadcast Service (MBS) session sent by a first network function entity, wherein the first time information is used to instruct the terminal to receive a paging message and/or service data related to the MBS session at first start time and/or first activation time; transitioning to a connected state from an idle state when the number of repeated executions of a target process reaches a first number and no paging message and/or service data related to the MBS session is obtained; wherein the target process includes: waking up at the first start time and/or the first activation time, and monitoring or attempting to receive a paging message and/or service data related to the MBS session; receiving a first message sent by the first network function entity, wherein the first message carries second time information, and the second time information is used to instruct the terminal to receive a paging message and/or service data related to the MBS session at second start time and/or second activation time.

In some embodiments, before receiving the first message sent by the first network function entity, the method further includes any one of the following: sending a registration update request or a service request to a second network function entity; or sending an application layer message for requesting to obtain the second time information to the first network function entity.

In some embodiments, the application layer message carries at least one of the following pieces of information: an identifier of the MBS session; the first time information; first indication information, used to indicate that the terminal has not received the paging message and/or service data related to the MBS session.

In some embodiments, the first number is a second number received by the terminal from the first network function entity; or the first number is a third number configured in the terminal.

In a second aspect, in order to address the above technical problem, an information transmission method applied to a first network function entity is provided. The method includes: sending first time information of an MBS session to a terminal, wherein the first time information is used to instruct the terminal to receive a paging message and/or service data related to the MBS session at first start time and/or first activation time; when it is determined that start time and/or activation time of the MBS session needs to be updated and the terminal is in an unreachable state, sending a first message to the terminal at target time; the first message carries second time information, and the second time information is used to instruct the terminal to receive a paging message and/or service data related to the MBS session at second start time and/or second activation time; wherein the target time includes at least one of the following: the first start time; the first activation time; start time of a broadcast session; activation time of a broadcast session.

In some embodiments, when the first time information indicates a plurality of first activation times, the target time includes a next first activation time, among the plurality of first activation times, that is earlier than the second activation time and closest to current time.

In some embodiments, when the MBS session is a multicast session, the target time includes start time of a broadcast session or the activation time of a broadcast session.

In some embodiments, the method further includes: receiving an application layer message sent by the terminal for requesting to obtain the second time information; sending a second message to the terminal according to the application layer message, wherein the second message carries the second time information.

In some embodiments, the application layer message carries at least one of the following pieces of information: an identifier of the MBS session; the first time information; first indication information, used to indicate that the terminal has not received the paging message and/or the service data related to the MBS session.

In some embodiments, the method further includes: sending first number information to the terminal, wherein the first number information is used to instruct the terminal to transition to a connected state or stop using the first start time and/or the first activation time, when the number of repeated executions of a target process reaches a first number and no paging message and/or service data related to the MBS session is obtained; wherein the target process includes: waking up at the first start time and/or the first activation time, and monitoring or attempting to receive a paging message and/or service data related to the MBS session.

In a third aspect, in order to address the above technical problem, a terminal is provided. The terminal includes: a transceiver, a memory, a processor, and a computer program stored in the memory and executable on the processor; the processor is used to read the program in the memory and perform the following processes: receiving first time information of a Multicast/Broadcast Service (MBS) session sent by a first network function entity, wherein the first time information is used to instruct the terminal to receive a paging message and/or service data related to the MBS session at first start time and/or first activation time; transitioning to a connected state from an idle state when the number of repeated executions of a target process reaches a first number and no paging message and/or service data related to the MBS session is obtained; wherein the target process includes: waking up at the first start time and/or the first activation time, and monitoring or attempting to receive a paging message and/or service data related to the MBS session; receiving a first message sent by the first network function entity, wherein the first message carries second time information, and the second time information is used to instruct the terminal to receive a paging message and/or service data related to the MBS session at second start time and/or second activation time.

In some embodiments, the processor is further used to read the program in the memory and perform the following processes: sending a registration update request or a service request to a second network function entity; or sending an application layer message for requesting to obtain the second time information to the first network function entity.

In some embodiments, the application layer message carries at least one of the following pieces of information: an identifier of the MBS session; the first time information; first indication information, used to indicate that the terminal has not received the paging message and/or the service data related to the MBS session.

In some embodiments, the first number is a second number received by the terminal from the first network function entity; or the first number is a third number configured in the terminal.

In a fourth aspect, in order to address the above technical problem, a first network function entity is provided. The first network function entity includes: a transceiver, a memory, a processor, and a computer program stored in the memory and executable on the processor; the processor is used to read the program in the memory and perform the following processes: sending first time information of an MBS session to a terminal, wherein the first time information is used to instruct the terminal to receive a paging message and/or service data related to the MBS session at first start time and/or first activation time; when it is determined that the start time and/or activation time of the MBS session needs to be updated and the terminal is in an unreachable state, sending a first message to the terminal at target time; the first message carries second time information, and the second time information is used to instruct the terminal to receive a paging message and/or service data related to the MBS session at second start time and/or second activation time; wherein the target time includes at least one of the following: the first start time; the first activation time; start time of a broadcast session; activation time of a broadcast session.

In some embodiments, when the first time information indicates a plurality of first activation times, the target time includes next first activation time, among the plurality of first activation times, that is earlier than the second activation time and closest to current time.

In some embodiments, when the MBS session is a multicast session, the target time includes start time of a broadcast session or activation time of a broadcast session.

In some embodiments, the processor is used to read the program in the memory and perform the following processes: receiving an application layer message sent by the terminal for requesting to obtain the second time information; sending a second message to the terminal according to the application layer message, wherein the second message carries the second time information.

In some embodiments, the application layer message carries at least one of the following pieces of information: an identifier of the MBS session; the first time information; first indication information, used to indicate that the terminal has not received the paging message and/or the service data related to the MBS session.

In some embodiments, the processor is used to read the program in the memory and perform the following processes: sending first number information to the terminal, wherein the first number information is used to instruct the terminal to transition to a connected state or stop using the first start time and/or the first activation time, when the number of repeated executions of a target process reaches a first number and no paging message and/or service data related to the MBS session is obtained; wherein the target process includes: waking up at the first start time and/or the first activation time, and monitoring or attempting to receive a paging message and/or service data related to the MBS session.

In a fifth aspect, an information transmission apparatus applied to a terminal is provided. The apparatus includes: a first receiving module, used to receive first time information of a Multicast/Broadcast Service (MBS) session sent by a first network function entity, wherein the first time information is used to instruct the terminal to receive a paging message and/or service data related to the MBS session at first start time and/or first activation time; a first processing module, used to transition to a connected state from an idle state when the number of repeated executions of a target process reaches a first number and no paging message and/or service data related to the MBS session is obtained; wherein the target process includes: waking up at the first start time and/or the first activation time, and monitoring or attempting to receive a paging message and/or service data related to the MBS session; a second receiving module, used to receive a first message sent by the first network function entity, wherein the first message carries second time information, and the second time information is used to instruct the terminal to receive a paging message and/or service data related to the MBS session at second start time and/or second activation time.

In a sixth aspect, in order to address the above technical problem, an information transmission apparatus applied to a first network function entity is provided. The apparatus includes: a third sending module, used to send first time information of an MBS session to a terminal, wherein the first time information is used to instruct the terminal to receive a paging message and/or service data related to the MBS session at first start time and/or first activation time; a fourth sending module, used to send a first message to the terminal at target time when it is determined that the start time and/or activation time of the MBS session needs to be updated and the terminal is in an unreachable state; the first message carries second time information, and the second time information is used to instruct the terminal to receive a paging message and/or service data related to the MBS session at second start time and/or second activation time; wherein the target time includes at least one of the following: the first start time; the first activation time; start time of a broadcast session; activation time of a broadcast session.

In a seventh aspect, in order to address the above technical problem, a processor-readable storage medium is provided., wherein the processor-readable storage medium stores a computer program, and the computer program is used to cause the processor to execute the information transmission method according to the first aspect, or the information transmission method according to the second aspect.

The beneficial effects of the above technical solutions of the present disclosure are as follows:

In the above solution, the terminal learns to receive a paging message and/or service data related to the MBS session at the first start time and/or the first activation time by receiving the first time information of the Multicast/Broadcast Service (MBS) session sent by the first network function entity. After the first network function entity updates the first start time and/or first activation time of the MBS session to the second start time and/or second activation time, the terminal fails to learn the second start time and/or second activation time in a timely manner due to being in an unreachable state. As a result, the terminal in sleep mode wakes up according to the known first start time and/or first activation time, and monitors or attempts to receive a paging message and/or service data related to the MBS session. When the number of repeated executions of this process reaches the first number, the terminal transitions to a connected state from an idle state. In this way, the terminal that has switched to the connected state can receive the second start time and/or second activation time of the MBS session sent by the first network function entity, thereby receiving paging messages and/or service data related to the MBS session at the second start time and/or second activation time. This solves the problem that the updated start time and activation time of the MBS session cannot be notified to the terminal when the terminal is unreachable.

### BRIEF DESCRIPTION OF THE DRAWINGS

FIG. 1 is a first flowchart of an information transmission method according to an embodiment of the present disclosure;
FIG. 2 is a second flowchart of an information transmission method according to an embodiment of the present disclosure;
FIG. 3 is a third flowchart of an information transmission method according to an embodiment of the present disclosure;
FIG. 4 is a fourth flowchart of an information transmission method according to an embodiment of the present disclosure;
FIG. 5 is a fifth flowchart of an information transmission method according to an embodiment of the present disclosure;
FIG. 6 is a sixth flowchart of an information transmission method according to an embodiment of the present disclosure;
FIG. 7 is a first structural diagram of an information transmission apparatus according to an embodiment of the present disclosure;
FIG. 8 is a second structural diagram of an information transmission apparatus according to an embodiment of the present disclosure;
FIG. 9 is a schematic diagram of a hardware structure of a terminal according to an embodiment of the present disclosure;
FIG. 10 is a schematic diagram of a hardware structure of a first network entity according to an embodiment of the present disclosure.

### DETAILED DESCRIPTION

The technical solutions in the embodiments of the present disclosure will be clearly and completely described below with reference to the accompanying drawings in the embodiments of the present disclosure. Obviously, the described embodiments are only a part of the embodiments of the present disclosure, rather than all the embodiments. Based on the embodiments in the present disclosure, all other embodiments obtained by those of ordinary skill in the art without making creative efforts shall fall within the protection scope of the present disclosure.

The term "and/or" in the embodiments of the present disclosure describes an association relationship between associated objects, indicating that there may be three relationships. For example, A and/or B may mean: A exists alone, A and B exist together, and B exists alone. The character "/" generally indicates that the associated objects are in an "or" relationship.

The term "plurality" in the embodiments of the present disclosure refers to two or more, and similar quantifiers are applicable here.

The terminal device involved in the embodiments of the present disclosure may be a device that provides voice and/or data connectivity to a user, a handheld device with a wireless connection function, or another processing device connected to a wireless modem. The name of the terminal device may vary in different systems; for example, in a 5th-Generation (5G) system, the terminal device may be called User Equipment (UE). A wireless terminal device can communicate with one or more Core Networks (CN) through a Radio Access Network (RAN). The wireless terminal device may be a mobile terminal device, such as a mobile phone (also called a "cellular" phone) and a computer with a mobile terminal device. For example, it may be a portable, pocket-sized, handheld, computer-built-in, or vehicle-mounted mobile device that exchanges voice and/or data with the radio access network. Examples include a Personal Communication Service (PCS) phone, a cordless phone, a Session Initiated Protocol (SIP) phone, a Wireless Local Loop (WLL) station, a Personal Digital Assistant (PDA), and the like. The wireless terminal device may also be referred to as a system, a subscriber unit, a subscriber station, a mobile station, a mobile, a remote station, an access point, a remote terminal, an access terminal, a user terminal, a user agent, or a user device, which is not limited in the embodiments of the present disclosure.

The network device involved in the embodiments of the present disclosure may be a base station, and the base station may include multiple cells that provide services for terminals. Depending on specific application scenarios, the base station may also be called an access point, or a device in an access network that communicates with a wireless terminal device through one or more sectors over an air interface, or by other names. The network device can be used to exchange received air interface frames with Internet Protocol (IP) packets, acting as a router between the wireless terminal device and the rest of the access network (the rest of the access network may include an IP communication network). The network device can also coordinate the management of air interface attributes. For example, the network device involved in the embodiments of the present disclosure may be a Base Transceiver Station (BTS) in the Global System for Mobile Communications (GSM) or Code Division Multiple Access (CDMA), a NodeB in Wideband Code Division Multiple Access (WCDMA), an evolved NodeB (eNB or e-NodeB) in the Long-Term Evolution (LTE) system, a 5G base station (gNB) in the next-generation system (next generation system), a Home evolved NodeB (HeNB), a relay node, a home base station (femto), a pico base station (pico), etc., which is not limited in the embodiments of the present disclosure. In some network structures, the network device may include a Centralized Unit (CU) node and a Distributed Unit (DU) node, and the centralized unit and the distributed unit may also be arranged separately in terms of geography.

The network device and the terminal device can each use one or more antennas for Multi-Input Multi-Output (MIMO) transmission, and the MIMO transmission can be Single-User MIMO (SU-MIMO) or Multi-User MIMO (MU-MIMO). Depending on the form and number of antenna combinations, MIMO transmission can be 2-Dimension MIMO (2D-MIMO), 3-Dimension MIMO (3D-MIMO), Full-Dimension MIMO (FD-MIMO), or massive MIMO (massive-MIMO), and can also be diversity transmission, precoding transmission, or beamforming transmission.

The content involved in the solutions provided by the embodiments of the present disclosure is first introduced below.

Data transmission modes used in IP networks include unicast, multicast, and broadcast. Unicast refers to "one-to-one communication", i.e., data is sent from one device to one receiving device; while multicast/broadcast refers to "one-to-many communication", i.e., the same data is sent from one device to multiple receiving devices through technologies such as shared channels and content replication. Compared with unicast, multicast/broadcast has higher network resource utilization efficiency.

The 5th-Generation Mobile Communication System (5G System, 5GS) is a new generation of wireless mobile communication systems after the 4th-Generation Mobile Communication System (4G System, i.e., EPS: Evolved Packet System). It provides larger transmission bandwidth, supports more terminals, and more service types. Currently, 5GS supports unicast transmission using a Protocol Data Unit (PDU) session. To support more services, such as IPv4/IPv6 multicast/broadcast, Internet Protocol Television (IPTV), or optimize the transmission efficiency and network resource utilization efficiency of related services (e.g., group communication, Internet of Things (IoT) communication, Vehicle-to-X (V2X) communication, software download/update, etc.), 5GS also supports multicast-broadcast service transmission using a Multicast/Broadcast Service (MBS) session.

To support the UE in being able to wake up to receive multicast and broadcast services (/data) within the relevant specified sleep period, a new mechanism is introduced: an Application Function (AF) sends the start time and activation time (i.e., data transmission time) of a multicast and/or broadcast session to the UE through a Service Announcement procedure (/message), so that the UE wakes up at the start time and activation time of the multicast and/or broadcast session to receive MBS data or MBS-related paging messages.

When the start time and/or activation time of the multicast and/or broadcast session needs to be updated, if the UE is unreachable (e.g., when the UE is in an idle state and asleep), the AF cannot notify the UE of the new start time and/or activation time through the Service Announcement procedure (/message). As a result, the UE still wakes up according to the old start time and/or activation time and fails to receive MBS data or MBS-related paging messages, which may instead increase the power consumption of the UE and fail to achieve the goals of power saving and correct reception of multicast/broadcast service data.

Based on the above, the embodiments of the present disclosure provide an information transmission method, an information transmission apparatus, a terminal, and a first network function entity, so as to solve the problem in the related art that the updated start time and activation time of an MBS session cannot be notified to the terminal when the terminal is unreachable.

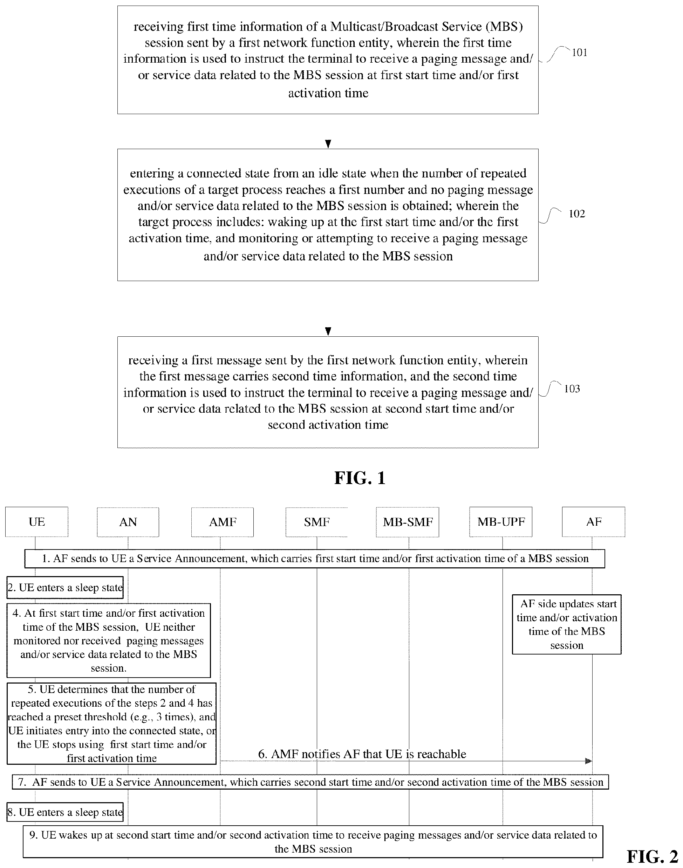

Referring to FIG. 1, an embodiment of the present disclosure provides an information transmission method applied to a terminal, which specifically includes the following steps: step 101: receive first time information of a Multicast/Broadcast Service (MBS) session sent by a first network function entity, where the first time information is used to instruct the terminal to receive a paging message and/or service data related to the MBS session at first start time and/or first activation time.

Exemplarily, the first network function entity is an Application Function (AF).

In some embodiments, the first time information indicates at least one first activation time for sending service data.

Step 102: transition to a connected state from an idle state when the number of repeated executions of a target process reaches a first number and no paging message and/or service data related to the MBS session are obtained; wherein the target process includes: waking up at the first start time and/or the first activation time, and monitoring or attempting to receive a paging message and/or service data related to the MBS session.

In specific implementation, after the first network function entity sends the first time information to the terminal, if the first network function entity has updated the first start time and/or first activation time of the MBS session to the second start time and/or second activation time through a Service Announcement, but the terminal cannot receive the Service Announcement and thus cannot learn the second start time and/or second activation time due to being in an unreachable state. Therefore, after the terminal wakes up at the first start time and/or first activation time, it does not obtain paging messages and/or service data related to the MBS session, i.e., it cannot monitor or receive a paging message and/or service data related to the MBS session after waking up at the first start time and/or first activation time.

Here, the terminal being in an unreachable state includes: no signaling connection or data transmission between the terminal and the network (i.e., the terminal is in an idle state), and/or the second network function entity pages the terminal but does not receive a response from the terminal (e.g., the UE is in a sleep state).

In some embodiments, the second network function entity is an Access and Mobility Management Function (AMF).

Here, the idle state means that no connection is established between the UE and the network, while the connected state means that a connection has been established between the UE and the network, and the UE can send messages or service data to the network or receive them from the network. Specifically, the "idle state" may refer to a Radio Resource Control IDLE (RRC_IDLE) state or a Connection Management-IDLE (CM-IDLE) state; the "connected state" may refer to a Radio Resource Control CONNECTED (RRC_CONNECTED) state or a Connection Management-CONNECTED (CM-CONNECTED) state.

Step 103: receive a first message sent by the first network function entity, where the first message carries second time information, and the second time information is used to instruct the terminal to receive a paging message and/or service data related to the MBS session at second start time and/or second activation time.

In some embodiments, the first message is a Service Announcement message.

In some embodiments, the first number is a second number received by the terminal from the first network function entity; or the first number is a third number configured in the terminal.

In the above embodiment, the terminal wakes up at the first start time and/or first activation time, monitors or attempts to receive a paging message and/or service data related to the MBS session. When the number of repeated executions of this process reaches the first number, if a paging message and/or service data related to the MBS session are still not obtained, the terminal transitions from the idle state to the connected state. The terminal that has transitioned to the connected state can receive the second start time and/or second activation time of the MBS session sent by the first network function entity, thereby receiving paging messages and/or service data related to the MBS session at the second start time and/or second activation time. This solves the problem that the network side cannot notify the terminal of the updated start time and activation time of the MBS session when the terminal is unreachable. The terminal receives the updated second start time and/or second activation time in a timely manner, ensuring information synchronization between the terminal and the network side, and achieving the effects of power saving for the terminal and correct reception of multicast/broadcast service data.

In an embodiment of the present disclosure, before receiving the first message sent by the first network function entity, the method further includes any one of the following: sending a registration update request or a service request to a second network function entity; or sending to the first network function entity an application layer message for requesting to obtain the second time information.

Exemplarily, referring to FIG. 2, taking the first network function entity being the AF and the second network function entity being the AMF as an example, the information transmission method of the present disclosure may include the following steps.

Step 1: the AF sends a Service Announcement to a terminal (UE), which carries the first start time and/or first activation time of the MBS session.

In some embodiments, the Service Announcement may further carry the number N (e.g., N=3), which is used to instruct the terminal to transition to a connected state or stop using the first start time and/or first activation time when the terminal fails to obtain (i.e., fails to monitor or receive) paging messages and/or service data related to the MBS session after waking up consecutively N times.

Step 2: the UE enters a sleep state.

Step 3: the AF side updates the start time and/or activation time of the MBS session.

Step 4: the UE wakes up at the first start time and/or first activation time of the MBS session, but does not monitor or receive a paging message and/or service data related to the MBS session.

Step 5: the UE determines that the number of repeated executions of the above steps 2 and 4 reaches the first number, and then the UE initiates entry into the connected state, or the UE stops using the first start time and/or first activation time (i.e., does not wake up at the first start time and/or first activation time to monitor or receive a paging message and/or service data related to the MBS session). Here, the first number is the number N carried by the AF in the Service Announcement in step 1 (if the number N is carried in the Service Announcement message of the AF in step 1), or the first number is a number M configured in the UE (e.g., M=2). The number M is used to instruct the terminal to transition to the connected state or stop using the currently stored start time and/or activation time of the MBS session when the terminal fails to obtain (fails to monitor or receive) paging messages and/or service data related to the MBS session after waking up consecutively M times. When the UE receives both the number N from the Service Announcement message and has the configured number M, whether the first number is set to N or M can be determined by the UE's local policy.

Step 6: if the UE transitions to the connected state, the AMF notifies the AF that the UE is reachable;

In specific implementation, the UE initiates a registration update or service request procedure to the AMF through a Radio Access Network (RAN). After receiving the registration update or service request, the AMF sends a terminal (UE)-reachable event notification to the AF.

Step 7: the AF sends a Service Announcement to the UE, which carries the second start time and/or second activation time of the MBS session;

Specifically, after receiving the UE-reachable event notification, the AF sends a Service Announcement carrying the second start time and/or second activation time to the UE.

Step 8: the UE transitions to a sleep state;

Step 9: the UE wakes up at the second start time and/or second activation time and receives a paging message and/or service data related to the MBS session.

Specifically, corresponding to the terminal-side embodiment, the first network function entity side performs the following steps:
receiving an application layer message sent by the terminal for requesting to obtain the second time information;
sending a second message to the terminal according to the application layer message, where the second message carries the second time information.

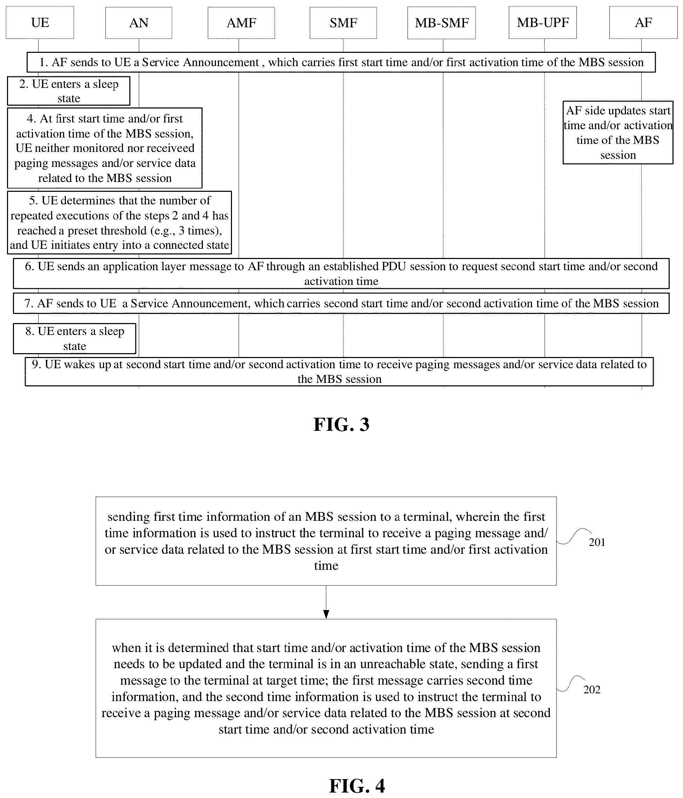

Exemplarily, referring to FIG. 3, taking the first network function entity being the AF as an example, the information transmission method of the present disclosure may include the following steps.

Step 1: the AF sends a Service Announcement to a terminal (UE), which carries the first start time and/or first activation time of the MBS session. In some embodiments, the Service Announcement may further carry the number N (e.g., N=3), which is used to instruct the terminal to transition to a connected state or stop using the first start time and/or first activation time when the terminal fails to monitor or receive a paging message and/or service data related to the MBS session after waking up consecutively N times.

Step 2: the UE transitions to a sleep state.

Step 3: the AF side updates the start time and/or activation time of the MBS session.

Step 4: the UE wakes up at the first start time and/or first activation time of the MBS session, but does not monitor or receive a paging message and/or service data related to the MBS session.

Step 5: the UE determines that the number of repeated executions of the above Steps 2 and 4 reaches the first number, and then the UE initiates transition into the connected state, or the UE stops using the first start time and/or first activation time (i.e., does not wake up at the first start time and/or first activation time to monitor or receive a paging message and/or service data related to the MBS session). Here, the first number is the number N carried by the AF in the Service Announcement in Step 1 (if the number N is carried in the Service Announcement message of AF in Step 1), or the first number is a number M configured in the UE (e.g., M=2). The number M is used to instruct the terminal to transition to the connected state or stop using the currently stored start time and/or activation time of the MBS session when the terminal fails to monitor or receive a paging message and/or service data related to the MBS session after waking up consecutively M times. When the UE receives both the number N from the Service Announcement message and has the configured number M, whether the first number is set to N or M can be determined by the UE's local policy.

Step 6: if the UE transitions to the connected state, the UE sends an application layer message to the AF through the established PDU session to request the second start time and/or second activation time.

Step 7: after receiving the application layer message, the AF sends a Service Announcement to the UE, which carries the second start time and/or second activation time of the MBS session;

Step 8: the UE transitions to a sleep state;

Step 9: the UE wakes up at the second start time and/or second activation time and receives a paging message and/or service data related to the MBS session.

In an optional embodiment of the present disclosure, the application layer message carries at least one of the following pieces of information: an identifier of the MBS session; the first time information; first indication information, used to indicate that the terminal has not received a paging message and/or service data related to the MBS session.

Specifically, corresponding to the terminal-side embodiment, the first network function entity side performs the following steps: sending first number information to the terminal, where the first number information is used to instruct the terminal to transition to a connected state or stop using the first start time and/or first activation time when the number of repeated executions of a target process reaches a first number and no paging message and/or service data related to the MBS session are obtained;

The target process includes: waking up at the first start time and/or first activation time, and monitoring or attempting to receive a paging message and/or service data related to the MBS session.

Referring to FIG. 4, the present disclosure provides another information transmission method applied to a first network function entity. In some embodiments, the first network function entity is an Application Function (AF), which specifically includes the following steps.

Step 201: send first time information of an MBS session to a terminal, where the first time information is used to instruct the terminal to receive a paging message and/or service data related to the MBS session at first start time and/or first activation time.

In some embodiments, the first time information indicates at least one first activation time instant for sending service data.

Step 202: when it is determined that the start time and/or activation time of the MBS session needs to be updated and the terminal is in an unreachable state, sending a first message to the terminal at target time; the first message carries second time information, and the second time information is used to instruct the terminal to receive a paging message and/or service data related to the MBS session at second start time and/or second activation time.

The target time includes at least one of the following: the first start time; the first activation time; the start time of a broadcast session; the activation time of a broadcast session.

Here, the terminal being in an unreachable state includes: no signaling connection or data transmission between the terminal and the network (i.e., the terminal is in an idle state), and/or the second network function entity pages the terminal but does not receive a response from the terminal (e.g., the UE is in a sleep state).

In an implementation manner, determining that the terminal is in an unreachable state includes: the second network function entity (e.g., AMF) reports a "UE unreachable" event to the first network function entity (e.g., AF) when it pages the terminal but does not receive a response from the terminal; the first network function entity (e.g., AF) determines that the terminal is unreachable according to the "UE unreachable" event reported by the second network function entity.

In the above embodiment, when the first network function entity confirms that the start time and/or activation time of the MBS session needs to be updated, if it is determined that the terminal is in an unreachable state, the first network function entity sends a first message (e.g., a Service Announcement) to the terminal at the target time to instruct the terminal to receive a paging message and/or service data related to the MBS session at the second start time and/or second activation time. This ensures that the terminal successfully receives paging messages and/or service data related to the MBS session at the correct second start time and/or second activation time, solving the problem that the network side cannot notify the terminal of the updated start time and activation time of the MBS session when the terminal is unreachable. This ensures information synchronization between the terminal and the network side, and achieves the goals of power saving for the terminal and correct reception of multicast/broadcast service data.

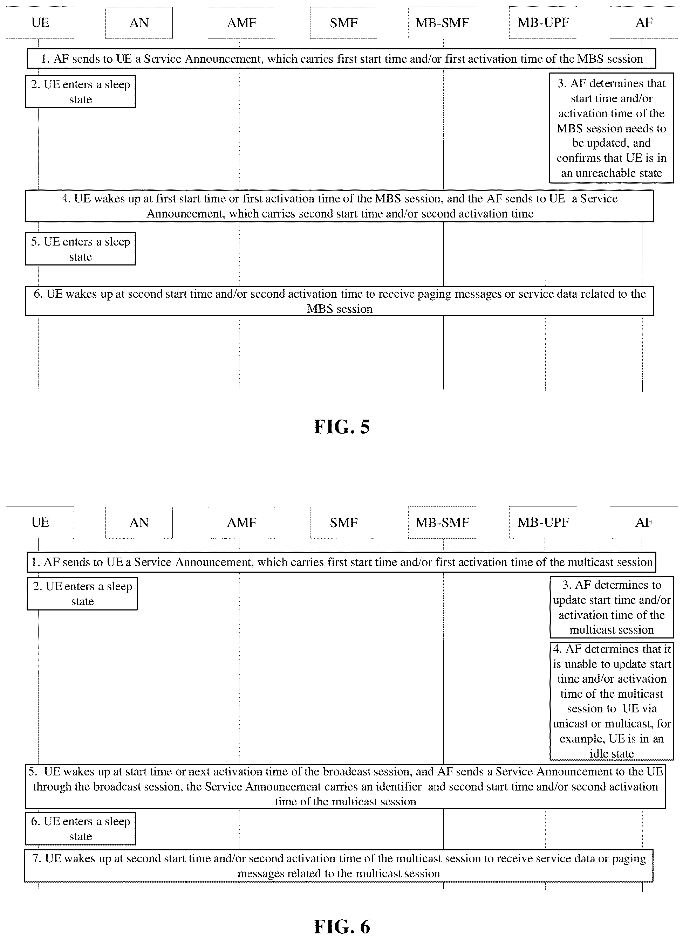

Exemplarily, referring to FIG. 5, taking the first network function entity beingthe AF as an example, the information transmission method of the present disclosure may include the following steps.

Step 1: the AF sends a Service Announcement to the UE, which carries the first start time and/or first activation time of the MBS session.

In some embodiments, the Service Announcement may further carry a number N (e.g., N=3), which is used to instruct the terminal to transition to a connected state or stop using the first start time and/or first activation time when the terminal fails to obtain (i.e., fails to monitor or receive) a paging message and/or service data related to the MBS session after waking up consecutively N times.

Step 2: the UE transitions to a sleep state;

Step 3: the AF determines that the start time and/or activation time of the MBS session needs to be updated, and determines that the UE is in an unreachable state;

Step 4: the UE wakes up at the first start time or first activation time of the MBS session, and the AF sends a Service Announcement to the UE, which carries the second start time and/or second activation time.

Here, the AF can send the Service Announcement to the UE in a unicast, multicast, or broadcast manner. If the AF adopts the unicast or multicast manner, the UE needs to monitor and receive the paging message sent by the network, transition to the connected state, and then the UE receives the Service Announcement message through a unicast PDU session or multicast session; if the AF sends the Service Announcement to the UE in a broadcast manner, the UE can directly receive the Service Announcement message through a broadcast session in the idle state.

Step 5: the UE transitions to a sleep state;

Step 6: the UE wakes up at the second start time and/or second activation time and receives service data or a paging message related to the MBS session.

It should be noted that when the target time includes the first start time, if the start time of the MBS session is updated, it is necessary to ensure that the first start time is before the second start time.

In an embodiment of the present disclosure, when the first time information indicates multiple first activation time instants, the target time includes the next first activation time instant among the multiple first activation time instants that is earlier than the second activation time instant and closest to the current time instant.

In an embodiment of the present disclosure, when the MBS session is a multicast session, the target time includes the start time of a broadcast session or the activation time of a broadcast session.

Exemplarily, referring to FIG. 6, taking the first network function entity being the AF as an example, the information transmission method of the present disclosure may include the following steps.

Step 1: the AF sends a Service Announcement to the UE, which carries the first start time and/or first activation time of the multicast session.

In some embodiments, the Service Announcement may further carry a number N (e.g., N=3), which is used to instruct the terminal to transition to a connected state or stop using the first start time and/or first activation time when the terminal fails to obtain (i.e., fails to monitor or receive) a paging message and/or service data related to the MBS session after waking up consecutively N times.

Step 2: the UE transitions to a sleep state.

Step 3: the AF determines that the start time and/or activation time of the multicast session needs to be updated.

Step 4: the AF determines that the terminal is in an unreachable state.

In specific implementation, the AF can determine that the terminal is in an unreachable state (e.g., the UE is in an idle state) based on the UE's status information reported by the AMF, and cannot update the start time and/or activation time of the multicast session to the UE in a unicast or multicast manner.

Step 5: the UE wakes up at the start time or next activation time of the broadcast session, and the AF sends a Service Announcement to the UE through the broadcast session, which carries the identifier of the multicast session, the second start time, and/or the second activation time;

It should be noted that if the start time of the multicast session is updated through the start time of the broadcast session, the second start time of the multicast session is later than the start time of the broadcast session.

Step 6: the UE transitions to a sleep state;

Step 7: the UE wakes up at the second start time and/or second activation time of the multicast session and receives service data or a paging message related to the multicast session.

In the above embodiment, since the terminal in the idle state can receive broadcast messages, the broadcast manner can be used to notify the terminal of the second time information of the multicast session. This saves more signaling and time compared with the unicast or multicast manner, and also avoids causing a signaling storm between the terminal and the network.

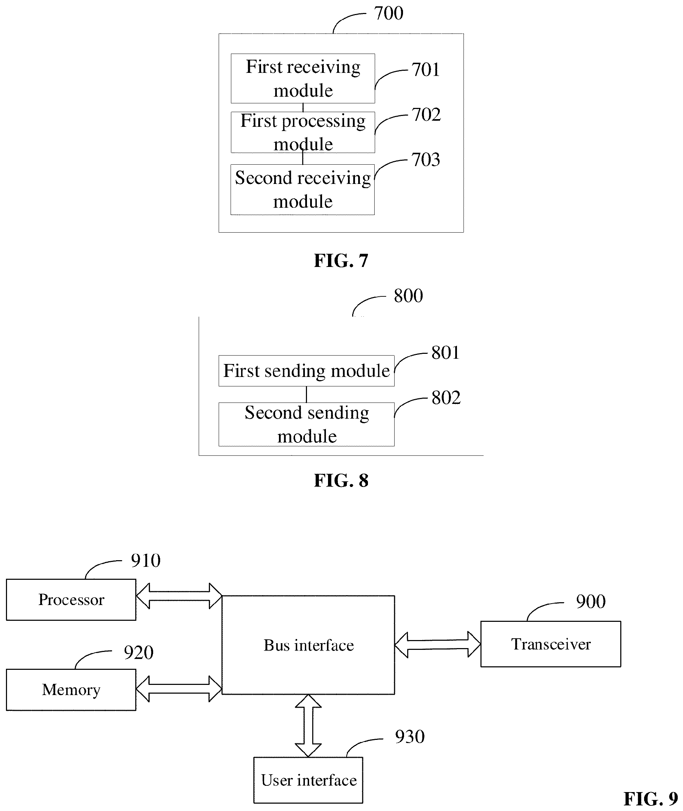

Referring to FIG. 7, an embodiment of the present disclosure provides an information transmission apparatus 700 applied to a terminal, including:
a first receiving module 701, used to receive first time information of a Multicast/Broadcast Service (MBS) session sent by a first network function entity, where the first time information is used to instruct the terminal to receive a paging message and/or service data related to the MBS session at first start time and/or first activation time;
a first processing module 702, used to transition to a connected state from an idle state when the number of repeated executions of a target process reaches a first number and no paging message and/or service data related to the MBS session are monitored or received; wherein the target process includes: waking up at the first start time and/or first activation time, and monitoring or attempting to receive a paging message and/or service data related to the MBS session;
a second receiving module 703, used to receive a first message sent by the first network function entity, where the first message carries second time information, and the second time information is used to instruct the terminal to receive a paging message and/or service data related to the MBS session at second start time and/or second activation time.

In some embodiments, the information transmission apparatus 700 further includes:
a first sending module, used to send a registration update request or a service request to a second network function entity; or
a second sending module, used to send an application layer message for requesting to obtain the second time information to the first network function entity.

In some embodiments, the application layer message carries at least one of the following pieces of information:
an identifier of the MBS session; the first time information; first indication information, used to indicate that the terminal has not received a paging message and/or service data related to the MBS session.

In some embodiments, the first number is a second number received by the terminal from the first network function entity; or the first number is a third number configured in the terminal.

It should be noted that the above information transmission apparatus 700 provided in the embodiment of the present disclosure can implement all the method steps implemented by the terminal-side method embodiment and achieve the same technical effects. The parts and beneficial effects that are the same as those of the method embodiment will not be described in detail in this embodiment.

Referring to FIG. 8, an embodiment of the present disclosure provides an information transmission apparatus 800 applied to a first network function entity, including:
a third sending module 801, used to send first time information of an MBS session to a terminal, where the first time information is used to instruct the terminal to receive a paging message and/or service data related to the MBS session at first start time and/or first activation time;
a fourth sending module 802, used to send a first message to the terminal at target time when it is determined that the start time and/or activation time of the MBS session needs to be updated and the terminal is in an unreachable state; the first message carries second time information, and the second time information is used to instruct the terminal to receive a paging message and/or service data related to the MBS session at second start time and/or second activation time;
wherein the target time includes at least one of the following: the first start time; the first activation time; the start time of a broadcast session; the activation time of a broadcast session.

In some embodiments, when the first time information indicates multiple first activation times, the target time includes the next first activation time instant among the multiple first activation time instants that is earlier than the second activation time and closest to the current time instant.

In some embodiments, when the MBS session is a multicast session, the target time includes the start time of a broadcast session or the activation time of a broadcast session.

In some embodiments, the information transmission apparatus 800 further includes:
a third receiving module, used to receive an application layer message sent by the terminal for requesting to obtain the second time information;
a fifth sending module, used to send a second message to the terminal based on the application layer message, where the second message carries the second time information.

In some embodiments, the application layer message carries at least one of the following pieces of information:
an identifier of the MBS session; the first time information; first indication information, used to indicate that the terminal has not received a paging message and/or service data related to the MBS session.

In some embodiments, the information transmission apparatus 800 further includes:
a sixth sending module, used to send first number information to the terminal, where the first number information is used to instruct the terminal to transition to a connected state or stop using the first start time and/or first activation time when the number of repeated executions of a target process reaches a first number and no paging message and/or service data related to the MBS session are obtained;
wherein the target process includes: waking up at the first start time and/or first activation time, and monitoring or attempting to receive a paging message and/or service data related to the MBS session.

It should be noted that the above apparatus provided in the embodiment of the present disclosure can implement all the method steps implemented by the first network function entity-side method embodiment and achieve the same technical effects. The parts and beneficial effects that are the same as those of the method embodiment will not be described in detail in this embodiment.

Referring to FIG. 9, an embodiment of the present disclosure provides a terminal, including: a processor 910; a transceiver 900, and a memory 920 connected to the processor 910 through a bus interface, where the memory 920 is used to store programs and data used by the processor 910 when performing operations, and the processor 910 invokes and executes the programs and data stored in the memory 920. The transceiver 900 is connected to the bus interface and used to receive and send data under the control of the processor 910; the processor 910 is used to read the program in the memory 920 and perform the following processes:
receiving first time information of a Multicast/Broadcast Service (MBS) session sent by a first network function entity, where the first time information is used to instruct the terminal to receive a paging message and/or service data related to the MBS session at first start time and/or first activation time;
transitioning to a connected state from an idle state when the number of repeated executions of a target process reaches a first number and no paging message and/or service data related to the MBS session are obtained; wherein the target process includes: waking up at the first start time and/or the first activation time, and monitoring or attempting to receive a paging message and/or service data related to the MBS session;
receiving a first message sent by the first network function entity, where the first message carries second time information, and the second time information is used to instruct the terminal to receive a paging message and/or service data related to the MBS session at second start time and/or second activation time.

In some embodiments, the processor 910 is further used to read the program in the memory 920 and perform the following processes:
sending a registration update request or a service request to a second network function entity; or sending an application layer message for requesting to obtain the second time information to the first network function entity.

In some embodiments, the application layer message carries at least one of the following pieces of information:
an identifier of the MBS session; the first time information; first indication information, used to indicate that the terminal has not received a paging message and/or service data related to the MBS session.

In some embodiments, the first number is a second number received by the terminal from the first network function entity; or the first number is a third number configured in the terminal.

In FIG. 9, the bus architecture may include any number of interconnected buses and bridges, and specifically links various circuits of one or more processors represented by the processor 910 and a memory represented by the memory 920. The bus architecture can also link various other circuits such as peripheral devices, voltage regulators, and power management circuits, which are well-known in the art and will not be further described herein. The bus interface provides an interface. The transceiver 900 may be multiple components, i.e., including a transmitter and a receiver, and provides a unit for communicating with various other devices over a transmission medium, where the transmission medium includes wireless channels, wired channels, optical fibers, and other transmission media. For different user devices, the user interface 930 may also be an interface capable of connecting externally or internally to required devices, and the connected devices include but are not limited to a keypad, a display, a speaker, a microphone, a joystick, and the like.

The processor 910 is responsible for managing the bus architecture and general processing, and the memory 920 can store data used by the processor 910 when performing operations.

In some embodiments, the processor 910 may be a Central Processing Unit (CPU), an Application-Specific Integrated Circuit (ASIC), a Field-Programmable Gate Array (FPGA), or a Complex Programmable Logic Device (CPLD), and the processor may also adopt a multi-core architecture.

The processor invokes the computer program stored in the memory to execute any of the methods provided in the embodiments of the present disclosure according to the obtained executable instructions. The processor and the memory may also be physically arranged separately.

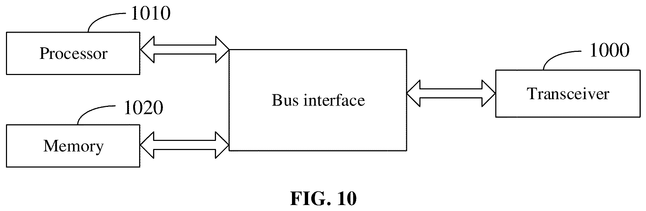

Referring to FIG. 10, an embodiment of the present disclosure provides a first network function entity, including: a processor 1010; a transceiver 1000; and a memory 1020 connected to the processor 1010 through a bus interface, where the memory 1020 is used to store programs and data used by the processor 1010 when performing operations, and the processor 1010 invokes and executes the programs and data stored in the memory 1020.

The transceiver 1000 is connected to the bus interface and used to receive and send data under the control of the processor 1010; the processor 1010 is used to read the program in the memory 1020 and perform the following processes:
sending first time information of an MBS session to a terminal, where the first time information is used to instruct the terminal to receive a paging message and/or service data related to the MBS session at first start time and/or first activation time;
when it is determined that the start time and/or activation time of the MBS session needs to be updated and the terminal is in an unreachable state, sending a first message to the terminal at target time; the first message carries second time information, and the second time information is used to instruct the terminal to receive a paging message and/or service data related to the MBS session at second start time and/or second activation time;
wherein the target time includes at least one of the following: the first start time; the first activation time; the start time of a broadcast session; the activation time of a broadcast session.

In some embodiments, when the first time information indicates multiple first activation time instants, the target time includes the next first activation time instant among the multiple first activation time instants that is earlier than the second activation time and closest to the current time.

In some embodiments, when the MBS session is a multicast session, the target time includes the start time of a broadcast session or the activation time of a broadcast session.

In some embodiments, the processor 1010 is further used to read the program in the memory 1020 and perform the following processes:
receiving an application layer message sent by the terminal for requesting to obtain the second time information;
sending a second message to the terminal according to the application layer message, where the second message carries the second time information.

In some embodiments, the application layer message carries at least one of the following pieces of information:
an identifier of the MBS session; the first time information; first indication information, used to indicate that the terminal has not received a paging message and/or service data related to the MBS session.

In some embodiments, the processor 1010 is further used to read the program in the memory 1020 and perform the following processes:
sending first number information to the terminal, where the first number information is used to instruct the terminal to transition to a connected state or stop using the first start time and/or first activation time when the number of repeated executions of a target process reaches a first number and no paging message and/or service data related to the MBS session are obtained;
wherein the target process includes: waking up at the first start time and/or first activation time, and monitoring or attempting to receive a paging message and/or service data related to the MBS session.

In FIG. 10, the bus architecture may include any number of interconnected buses and bridges, and specifically links various circuits of one or more processors represented by the processor 1010 and a memory represented by the memory 1020. The bus architecture can also link various other circuits such as peripheral devices, voltage regulators, and power management circuits, which are well-known in the art and will not be further described herein. The bus interface provides an interface. The transceiver 1000 may be multiple components, i.e., including a transmitter and a receiver, and provides a unit for communicating with various other devices over a transmission medium, where the transmission medium includes wireless channels, wired channels, optical fibers, and other transmission media. The processor 1010 is responsible for managing the bus architecture and general processing, and the memory 1020 can store data used by the processor 1010 when performing operations.

The processor 910 may be a Central Processing Unit (CPU), an Application-Specific Integrated Circuit (ASIC), a Field-Programmable Gate Array (FPGA), or a Complex Programmable Logic Device (CPLD), and the processor may also adopt a multi-core architecture.

The present disclosure further provides a processor-readable storage medium, where the processor-readable storage medium stores a computer program, and the computer program is used to cause the processor to execute the information transmission method on the terminal side or the first network function entity side.

The processor-readable storage medium may be any available medium or data storage device that can be accessed by a processor, including but not limited to magnetic memories (e.g., floppy disks, hard disks, magnetic tapes, Magneto-Optical (MO) disks, etc.), optical memories (e.g., Compact Disks (CDs), Digital Video Disks (DVDs), Blu-ray Discs (BDs), High-Definition Versatile Discs (HVDs), etc.), and semiconductor memories (e.g., Read-Only Memories (ROMs), Erasable Programmable Read-Only Memories (EPROMs), Electrically Erasable Programmable Read-Only Memories (EEPROMs), NAND flash memories, Solid State Drives (SSDs), etc.).

It should be noted that the division of units in the embodiments of the present disclosure is schematic and only represents a logical function division. In actual implementation, there may be another division manner. In addition, functional units in the embodiments of the present disclosure may be integrated into one processing unit, or each unit may exist physically independently, or two or more units may be integrated into one unit. The integrated unit may be implemented in the form of hardware or in the form of a software functional unit.

When the integrated unit is implemented in the form of a software functional unit and sold or used as an independent product, it may be stored in a processor-readable storage medium. Based on this understanding, the technical solution of the present disclosure essentially, or the part that contributes to the related art, or all or part of the technical solution may be embodied in the form of a software product. The computer software product is stored in a storage medium and includes several instructions for enabling a computer device (which may be a personal computer, a server, a network device, etc.) or a processor to execute all or part of the steps of the method described in the embodiments of the present disclosure. The aforementioned storage medium includes various media that can store program codes, such as a USB flash drive, a removable hard disk, a Read-Only Memory (ROM), a Random Access Memory (RAM), a magnetic disk, or an optical disk.

Those skilled in the art should understand that the embodiments of the present disclosure may be provided as a method, a system, or a computer program product. Therefore, the present disclosure may be in the form of an entire hardware embodiment, an entire software embodiment, or an embodiment combining software and hardware. Moreover, the present disclosure may be in the form of a computer program product implemented on one or more computer-readable storage media (including but not limited to disk memories, optical memories, etc.) containing computer-readable program codes.

These processor-executable instructions may also be stored in a processor-readable memory that enables a computer or other programmable data processing device to work in a specific manner, so that the instructions stored in the processor-readable memory produce an article of manufacture including an instruction device, which implements the functions specified in one or more flows in the flowcharts and/or one or more blocks in the block diagrams.

These processor-executable instructions may also be loaded onto a computer or other programmable data processing device, so that a series of operation steps are performed on the computer or other programmable device to produce a computer-implemented process. Therefore, the instructions executed on the computer or other programmable device provide steps for implementing the functions specified in one or more flows in the flowcharts and/or one or more blocks in the block diagrams.

It should be noted that it should be understood that the division of the above modules is only a division of logical functions, and in actual implementation, all or part of them may be integrated into a physical entity, or may be physically separated. Moreover, these modules may all be implemented in the form of software invoked by a processing component; or may all be implemented in the form of hardware; or some modules may be implemented in the form of software invoked by a processing component, and some modules may be implemented in the form of hardware. For example, the determining module may be a separately provided processing component, or may be integrated into a chip of the above device. In addition, the determining module may also be stored in the memory of the above device in the form of program code, and the function of the determining module is invoked and executed by a processing component of the above device. The implementation of other modules is similar to this. In addition, all or part of these modules may be integrated together, or may be implemented independently. The processing component described herein may be an integrated circuit with signal processing capabilities. In the implementation process, the steps of the above method or the above modules may be completed by an integrated logic circuit of hardware in the processing component or instructions in the form of software.

For example, each module, unit, sub-unit, or sub-module may be one or more integrated circuits used to implement the above method, such as one or more Application-Specific Integrated Circuits (ASICs), or one or more microprocessors (Digital Signal Processors, DSPs), or one or more Field-Programmable Gate Arrays (FPGAs). For another example, when one of the above modules is implemented in the form of a program code called by a processing component, the processing component may be a general-purpose processor, such as a Central Processing Unit (CPU) or other processors that can call the program code. For another example, these modules may be integrated together and implemented in the form of a System-on-a-Chip (SoC).

The terms "first" and "second" in the specification and claims of the present disclosure are used to distinguish similar objects, and are not necessarily used to describe a specific order or sequence. It should be understood that the data used in this way can be interchanged under appropriate circumstances, so that the embodiments of the present disclosure described herein can be implemented in an order other than those illustrated or described herein. In addition, the terms "include", "have", and any variations thereof are intended to cover non-exclusive inclusions. For example, a process, method, system, product, or device that includes a series of steps or units is not necessarily limited to the clearly listed steps or units, but may include other steps or units that are not clearly listed or are inherent to the process, method, product, or device. In addition, the use of "and/or" in the specification and claims indicates at least one of the connected objects. For example, A and/or B and/or C means that there are seven cases: A alone, B alone, C alone, both A and B, both B and C, both A and C, and both A, B, and C. Similarly, the use of "at least one of A and B" in the specification and claims should be understood as "A alone, B alone, or both A and B".

Obviously, those skilled in the art can make various modifications and variations to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations.

## Claims

1. An information transmission method applied to a terminal, comprising:
receiving first time information of a Multicast/Broadcast Service (MBS) session sent by a first network function entity, wherein the first time information is used to instruct the terminal to receive a paging message and/or service data related to the MBS session at first start time and/or first activation time;
transitioning to a connected state from an idle state when the number of repeated executions of a target process reaches a first number and no paging message and/or service data related to the MBS session is obtained; wherein the target process includes: waking up at the first start time and/or the first activation time, and monitoring or attempting to receive a paging message and/or service data related to the MBS session;
receiving a first message sent by the first network function entity, wherein the first message carries second time information, and the second time information is used to instruct the terminal to receive a paging message and/or service data related to the MBS session at second start time and/or second activation time.

2. The information transmission method according to claim 1, wherein before receiving the first message sent by the first network function entity, the method further comprises any one of the following:
sending a registration update request or a service request to a second network function entity; or
sending an application layer message for requesting to obtain the second time information to the first network function entity.

3. The information transmission method according to claim 2, wherein the application layer message carries at least one of the following pieces of information:
an identifier of the MBS session;
the first time information;
first indication information, used to indicate that the terminal has not received the paging message and/or service data related to the MBS session.

4. The information transmission method according to claim 1, wherein the first number is a second number received by the terminal from the first network function entity; or the first number is a third number configured in the terminal.

5. An information transmission method applied to a first network function entity, comprising:
sending first time information of an MBS session to a terminal, wherein the first time information is used to instruct the terminal to receive a paging message and/or service data related to the MBS session at first start time and/or first activation time;
when it is determined that start time and/or activation time of the MBS session needs to be updated and the terminal is in an unreachable state, sending a first message to the terminal at target time; the first message carries second time information, and the second time information is used to instruct the terminal to receive a paging message and/or service data related to the MBS session at second start time and/or second activation time;
wherein the target time includes at least one of the following:
the first start time;
the first activation time;
start time of a broadcast session;
activation time of a broadcast session.

6. The information transmission method according to claim 5, wherein when the first time information indicates a plurality of first activation times, the target time includes a next first activation time, among the plurality of first activation times, that is earlier than the second activation time and closest to current time.

7. The information transmission method according to claim 5, wherein when the MBS session is a multicast session, the target time includes start time of a broadcast session or the activation time of a broadcast session.

8. The information transmission method according to claim 5, wherein the method further comprises:
receiving an application layer message sent by the terminal for requesting to obtain the second time information;
sending a second message to the terminal according to the application layer message, wherein the second message carries the second time information.

9. The information transmission method according to claim 8, wherein the application layer message carries at least one of the following pieces of information:
an identifier of the MBS session;
the first time information;
first indication information, used to indicate that the terminal has not received the paging message and/or the service data related to the MBS session.

10. The information transmission method according to claim 5, wherein the method further comprises:
sending first number information to the terminal, wherein the first number information is used to instruct the terminal to transition to a connected state or stop using the first start time and/or the first activation time, when the number of repeated executions of a target process reaches a first number and no paging message and/or service data related to the MBS session is obtained;
wherein the target process includes: waking up at the first start time and/or the first activation time, and monitoring or attempting to receive a paging message and/or service data related to the MBS session.

11. A terminal, comprising: a transceiver, a memory, a processor, and a computer program stored in the memory and executable on the processor; the processor is used to read the program in the memory and perform the following processes:
receiving first time information of a Multicast/Broadcast Service (MBS) session sent by a first network function entity, wherein the first time information is used to instruct the terminal to receive a paging message and/or service data related to the MBS session at first start time and/or first activation time;
transitioning to a connected state from an idle state when the number of repeated executions of a target process reaches a first number and no paging message and/or service data related to the MBS session is obtained; wherein the target process includes: waking up at the first start time and/or the first activation time, and monitoring or attempting to receive a paging message and/or service data related to the MBS session;
receiving a first message sent by the first network function entity, wherein the first message carries second time information, and the second time information is used to instruct the terminal to receive a paging message and/or service data related to the MBS session at second start time and/or second activation time.

12. The terminal according to claim 11, wherein the processor is further used to read the program in the memory and perform the following processes:
sending a registration update request or a service request to a second network function entity; or
sending an application layer message for requesting to obtain the second time information to the first network function entity.

13. The terminal according to claim 12, wherein the application layer message carries at least one of the following pieces of information:
an identifier of the MBS session;
the first time information;
first indication information, used to indicate that the terminal has not received the paging message and/or the service data related to the MBS session.

14. The terminal according to claim 11, wherein the first number is a second number received by the terminal from the first network function entity; or the first number is a third number configured in the terminal.

15. A first network function entity, comprising: a transceiver, a memory, a processor, and a computer program stored in the memory and executable on the processor; the processor is used to read the program in the memory and perform the following processes:
sending first time information of an MBS session to a terminal, wherein the first time information is used to instruct the terminal to receive a paging message and/or service data related to the MBS session at first start time and/or first activation time;
when it is determined that the start time and/or activation time of the MBS session needs to be updated and the terminal is in an unreachable state, sending a first message to the terminal at target time; the first message carries second time information, and the second time information is used to instruct the terminal to receive a paging message and/or service data related to the MBS session at second start time and/or second activation time;
wherein the target time includes at least one of the following:
the first start time;
the first activation time;
start time of a broadcast session;
activation time of a broadcast session.

16. The first network function entity according to claim 15, wherein when the first time information indicates a plurality of first activation times, the target time includes next first activation time, among the plurality of first activation times, that is earlier than the second activation time and closest to current time.

17. The first network function entity according to claim 15, wherein when the MBS session is a multicast session, the target time includes start time of a broadcast session or activation time of a broadcast session.

18. The first network function entity according to claim 15, wherein the processor is used to read the program in the memory and perform the following processes:
receiving an application layer message sent by the terminal for requesting to obtain the second time information;
sending a second message to the terminal according to the application layer message, wherein the second message carries the second time information.

19. The first network function entity according to claim 18, wherein the application layer message carries at least one of the following pieces of information:
an identifier of the MBS session;
the first time information;
first indication information, used to indicate that the terminal has not received the paging message and/or the service data related to the MBS session.

20. The first network function entity according to claim 15, wherein the processor is used to read the program in the memory and perform the following processes:
sending first number information to the terminal, wherein the first number information is used to instruct the terminal to transition to a connected state or stop using the first start time and/or the first activation time, when the number of repeated executions of a target process reaches a first number and no paging message and/or service data related to the MBS session is obtained;
wherein the target process includes: waking up at the first start time and/or the first activation time, and monitoring or attempting to receive a paging message and/or service data related to the MBS session.

21. An information transmission apparatus applied to a terminal, comprising:
a first receiving module, used to receive first time information of a Multicast/Broadcast Service (MBS) session sent by a first network function entity, wherein the first time information is used to instruct the terminal to receive a paging message and/or service data related to the MBS session at first start time and/or first activation time;
a first processing module, used to transition to a connected state from an idle state when the number of repeated executions of a target process reaches a first number and no paging message and/or service data related to the MBS session is obtained; wherein the target process includes: waking up at the first start time and/or the first activation time, and monitoring or attempting to receive a paging message and/or service data related to the MBS session;
a second receiving module, used to receive a first message sent by the first network function entity, wherein the first message carries second time information, and the second time information is used to instruct the terminal to receive a paging message and/or service data related to the MBS session at second start time and/or second activation time.

22. The information transmission apparatus according to claim 21, wherein the information transmission apparatus further comprises:
a first sending module, used to send a registration update request or a service request to a second network function entity; or
a second sending module, used to send an application layer message for requesting to obtain the second time information to the first network function entity.

23. The information transmission apparatus according to claim 22, wherein the application layer message carries at least one of the following pieces of information:
an identifier of the MBS session;
the first time information;
first indication information, used to indicate that the terminal has not received the paging message and/or the service data related to the MBS session.

24. The information transmission apparatus according to claim 21, wherein the first number is a second number received by the terminal from the first network function entity; or the first number is a third number configured in the terminal.

25. An information transmission apparatus applied to a first network function entity, comprising:
a third sending module, used to send first time information of an MBS session to a terminal, wherein the first time information is used to instruct the terminal to receive a paging message and/or service data related to the MBS session at first start time and/or first activation time;
a fourth sending module, used to send a first message to the terminal at target time when it is determined that the start time and/or activation time of the MBS session needs to be updated and the terminal is in an unreachable state; the first message carries second time information, and the second time information is used to instruct the terminal to receive a paging message and/or service data related to the MBS session at second start time and/or second activation time;
wherein the target time includes at least one of the following:
the first start time;
the first activation time;
start time of a broadcast session;
activation time of a broadcast session.

26. The information transmission apparatus according to claim 25, wherein when the first time information indicates a plurality of first activation times, the target time includes next first activation time, among the plurality of first activation times, that is earlier than the second activation time and closest to current time.

27. The information transmission apparatus according to claim 25, wherein when the MBS session is a multicast session, the target time includes start time of a broadcast session or activation time of a broadcast session.

28. The information transmission apparatus according to claim 25, wherein the information transmission apparatus further comprises:
a third receiving module, used to receive an application layer message sent by the terminal for requesting to obtain the second time information;
a fifth sending module, used to send a second message to the terminal according to the application layer message, wherein the second message carries the second time information.

29. The information transmission apparatus according to claim 28, wherein the application layer message carries at least one of the following pieces of information:
an identifier of the MBS session;
the first time information;
first indication information, used to indicate that the terminal has not received the paging message and/or the service data related to the MBS session.

30. The information transmission apparatus according to claim 25, wherein the information transmission apparatus further comprises:
a sixth sending module, used to send first number information to the terminal, wherein the first number information is used to instruct the terminal to transition to a connected state or stop using the first start time and/or the first activation time when the number of repeated executions of a target process reaches a first number and no paging message and/or service data related to the MBS session are obtained;
wherein the target process includes: waking up at the first start time and/or the first activation time, and monitoring or attempting to receive a paging message and/or service data related to the MBS session.

31. A processor-readable storage medium, wherein the processor-readable storage medium stores a computer program, and the computer program is used to cause the processor to execute the information transmission method according to any one of claims 1 to 4, or the information transmission method according to any one of claims 5 to 10.
